# EUROPÄISCHE PATENTSCHRIFT

(11) **EP 1 249 410 B1**
(45) Veröffentlichungstag und Bekanntmachung des Hinweises auf die Patenterteilung: **03.08.2005**
(21) Anmeldenummer: 02007700.4
(22) Anmeldetag: 05.04.2002
(51) Int. Cl.: B65G 51/03, B65G 54/02, B23Q 1/38, B60V 3/04

(54) **Vorrichtung mit einer Plattform, einem Stützkörper und Luftpolstererzeugungsmitteln**
Air cushion apparatus with a platform and a support
Appareil à coussin d'air avec une plate-forme et un support

(30) Priorität: 09.04.2001 DE 10117632
(43) Veröffentlichungstag der Anmeldung: 16.10.2002
(73) Patentinhaber: AWU Präzisionswellen GmbH & Co.KG, 44575 Castrop-Rauxel (DE)
(72) Erfinder: Vansichen, Maxime, B-3722 Kortessem (BE); Pape, Detlef F. Dr.-Ing., 45470 Mülheim (DE)
(74) Vertreter: Rohmann, Michael, Dr.

(56) Entgegenhaltungen:
- DE-A- 3 344 267
- US-A- 3 952 666
- US-A- 4 579 320
- US-A- 4 627 362
- US-A- 5 566 620
- US-A- 5 668 421
- US-A- 5 909 710

## Beschreibung

Die Erfindung betrifft eine Vorrichtung mit einer Plattform und mindestens einem Stützkörper sowie Luftpolstererzeugungsmitteln zur Erzeugung eines Luftpolsters zwischen der Plattform und den Stützkörpern, wobei die Plattform luftgleitgelagert translatorisch bewegbar ist.

Luftgleitgelagerte Plattformen liegen auf einem durch geeignete Mittel zwischen der Plattform und einem Stützkörper erzeugten Luftpolster auf. Dadurch wird die Plattform ohne direkten Kontakt mit dem Stützkörper gestützt. Durch den geringen Reibkoeffizienten zwischen Luft und Plattform besteht nur eine sehr geringe Haftreibung zwischen der Plattform und dem Luftpolster. Ferner besteht bei Bewegung der Plattform nur eine geringe Gleitreibung zwischen der Plattform und dem Luftpolster. Die Plattform kann deshalb mit geringem Kraftaufwand in Bewegung versetzt werden und in Bewegung gehalten werden.

Aus der Praxis sind Vorrichtungen bekannt, deren Stützkörper eine der Plattform zugewandte rechteckige Fläche aufweisen. Die ebenfalls rechteckige Plattform wird durch ein zwischen der horizontalen Oberfläche des Stützkörpers und der Plattform erzeugtes Luftpolster gestützt. Um die Bewegung der Plattform entlang des Stützkörpers zu führen, ist die Plattform derart ausgebildet, dass sie den Stützkörper seitlich, mit vertikalen Führungselementen umgreift. Die Plattform wird durch einen Linearmotor entlang des Stützkörpers bewegt.

Zur präzisen Bewegung der Plattform ist es notwendig, dass der Stützkörper mit seiner der Plattform zugewandten Oberfläche vollständig plan ist. Andernfalls würde durch die Variation der Spaltbreite zwischen Plattform und Stützkörper das Luftpolster in seinen Eigenschaften, beispielsweise dem Druck im Luftpolster, variieren. Variationen der Eigenschaften des Luftpolsters, insbesondere des Drucks im Luftpolster, führen zur ungleichmäßigen Bewegung der Plattform. Besonders bei Anwendungen, bei denen die Plattform entlang des Stützkörpers an präzise anzusteuernde Punkte bewegt werden muss, ist es notwendig, die Bewegung der Plattform gleichmäßig durchzuführen, damit diese gut regelbar ist. Da innerhalb der für solche Systeme notwendigen engen Toleranzen vollständig plane, rechteckige Oberflächen nur mit großem Aufwand hergestellt werden können, werden die Stützkörper nur mit geringer Länge hergestellt. Die aus der Praxis bekannte Vorrichtung weist beispielsweise eine Länge von 1,2 m auf. Damit ist die bekannte Vorrichtung für Prozesse, in denen die Plattform über größere Distanzen bewegt werden muss, nachteilig. So ist es für Vorrichtungen, bei denen die Plattform über größere Distanzen exakt geführt und bewegt werden muss, notwendig, mehrere Stützkörper aneinander zu legen. Dies führt insbesondere an den Verbindungspunkten der Stützkörper zu Ungenauigkeiten in der Führung der Plattform, die nur mit aufwändigen Maßnahmen ausgeglichen werden können. Ferner wird durch die oben beschriebenen seitlichen Führungselemente Reibung erzeugt.

Im Rahmen der US-A-5 909 710 wird eine insgesamt gattungsgemäße Vorrichtung beschrieben. Der sich zwischen dem jeweiligen Luftpolstererzeugungsmittel und den Stützkörpern einstellende Luftspalt liegt im Bereich mehrerer Millimeter und ist einer präzisen Führung der Plattform abträglich.

Die US-A-5 566 620 offenbart eine Vorrichtung gemäß dem Oberbegriff des Anspruchs 1.

Vor diesem Hintergrund liegt der Erfindung das technische Problem zu Grunde, die eingangs genannte Vorrichtung derart fortzubilden, dass kostengünstig Stützkörper großer Länge eingesetzt werden können und dass vor allem eine funktionssichere, störungsfreie und präzise Bewegung der Plattform bzw. des Stützkörpers möglich ist.

Die Enfindung löst dieses Problem mit den Merkmalen des Anspruchs 1.

Dass der Stützkörper zylindrisch ausgebildet ist, meint im Rahmen der Erfindung insbesondere, dass der Stützkörper im Querschnitt kreiszylindrisch ausgebildet ist. Teilzylindrische Ausnehmung der Plattform meint, dass die Wandung der Ausnehmung im Querschnitt kreisbogenförmig ausgebildet ist. Bei der teilzylindrischen Ausnehmung kann es sich insbesondere um eine halbzylindrische Ausnehmung handeln. Die Ausnehmung der Plattform umfasst zweckmäßigerweise zumindest ein Drittel des Umfanges des zylindrischen Stützkörpers. D. h. mit anderen Worten, dass der zylindrische Stützkörper vorzugsweise mit zumindest einem Drittel seines Umfanges in die teilzylindrische Ausnehmung eingreift. Dass zwischen Plattform und zylindrischem Stützkörper ein im Querschnitt kreisbogenförmiger Spalt ausgebildet ist, meint insbesondere den Zustand mit bereits erzeugtem Luftpolster. - Wie oben bereits erwähnt weist die erfindungsgemäße Vorrichtung eine luftgleitgelagerte translatorisch bewegbare Plattform und zumindest einen demgegenüber fest angeordneten Stützkörper auf.

Zylindrische Stützkörper sind auch in großen Längen mit genauen Toleranzen bezüglich ihrer Zylindrizität herzustellen. Dadurch ist es möglich, ein Luftpolster zwischen dem Stützkörper und der Plattform zu erzeugen, das entlang der Länge des Stützkörpers nicht variiert. Dies insbesondere deshalb, weil der Spalt zwischen der Plattform und dem Stützkörper stets gleich bleibt. Da das Luftpolster gleichbleibend erzeugt werden kann und damit der Reibungskoeffizient zwischen dem Luftpolster und der Plattform gleich bleibt, ist die Bewegung der Plattform entlang des Stützkörpers gut regelbar. Dies insbesondere bezüglich einer gleichbleibenden Geschwindigkeit, aber auch bezüglich der exakten Positionierung der Plattform an einer anzusteuernden Stelle entlang des Stützkörpers. Ferner wird die Plattform stets im gleichbleibenden Abstand zum Stützkörper gehalten.

Als luftgleitgelagert im Rahmen dieser Erfindung wird jede Plattform verstanden, die durch berührungslose Lagerung relativ zum Stützkörper gehalten wird, in dem die Plattform durch ein Fluidpolster gestützt wird. Dieses Fluidpolster wird bevorzugt durch Einblasen von Luft in einen zwischen Plattform und Stützkörper befindlichen Spalt unter Druck erzeugt. Neben dem Einsatz von Luft ist jedoch auch die Verwendung eines jeglichen anderen Fluids, beispielsweise eines Inertgases oder einer Flüssigkeit, denkbar, die dazu geeignet sind - insbesondere wenn druckbeaufschlagt - die Plattform kontaktlos relativ zum Stützkörper zu halten. Im Folgenden wird der Begriff Luft verwendet, der jedoch als Synonym mit einem der zuvor genannten Fluiden zu verstehen ist.

Luftpolstererzeugungsmittel sind geeignete Mittel, die die Luft derart zwischen Plattform und Stützkörper einbringen, dass dort ein Luftpolster gebildet wird. Bevorzugt sind Luftpolstererzeugungsmittel, die Luftstrahlen erzeugen, die von der dem Stützkörper zugewandten Fläche der Plattform gegen den Stützkörper gerichtet sind. Derartige Luftstrahlen entfalten ihre Stützfunktion unter anderem deshalb, weil sie gegen den Stützkörper prallen. Das Luftpolster wird bei einer derartigen Ausgestaltung der Erfindung zum einen durch eine Vielzahl von insbesondere parallel zueinander ausgerichteten Luftstrahlen und zum anderen durch die abgeprallte Luft der Luftstrahlen gebildet, die - druckbeaufschlagt - den Spalt zwischen Plattform und Stützkörper füllt.

Es liegt im Rahmen der Erfindung, dass die Luftpolstererzeugungsmittel in dem kreisbogenförmigen Spalt zwischen Stützkörper und Plattform angeordnet sind. Es liegt fernerhin im Rahmen der Erfindung, dass in Längsrichtung eines zylindrischen Stützkörpers eine Mehrzahl von Luftpolstererzeugungsmitteln hintereinander angeordnet sind. Nach sehr bevorzugter Ausführungsform, der im Rahmen der Erfindung ganz besondere Bedeutung zukommt, ist zumindest ein Teil der in einer teilzylindrischen Ausnehmung der Plattform hintereinander angeordneten Luftpolstererzeugungsmittel in Bezug auf den Umfang des jeweiligen zylindrischen Stützkörpers versetzt zueinander angeordnet. Dadurch ergibt sich eine besonders funktionssichere und exakte Führung bzw. Bewegung der Plattform.

Die Plattform muss eine Formgebung aufweisen, die dem Luftpolster zugewandt eine hinreichend große und entsprechend ausgestaltete Fläche aufweist, um bei gegebenen Fluid und gegebenen Druck die Plattform kontaktlos zum Stützkörper zu halten. Darüber hinaus kann die Plattform jede für die gewünschte Anwendung notwendige Form haben und ist hinsichtlich ihrer Formgebung nicht auf rechteckig, plane Formen beschränkt. Bevorzugt weist die Plattform jedoch an ihrer dem Stützkörper abgewandte Seite eine ebene, insbesondere rechteckige Fläche auf. Damit kann die Plattform als bewegbarer Tisch verwendet werden, auf dem zu bewegende Elemente befestigt werden können. Die Plattform kann jedoch auch Teil eines zu bewegenden Bauteils sein, beispielsweise eines Roboters, Roboterteils oder einer zu bewegenden Tür.

Der Erfindung liegt die Erkenntnis zu Grunde, dass eine besonders gute Führung der Plattform während ihrer Bewegung entlang der Stützkörper erreicht wird, wenn die Plattform den Stützkörper zumindest teilweise umgreift. Erfindungsgemäß umgreift deshalb die Plattform den zylindrischen Stützkörper zumindest teilweise. Der Spalt zwischen der Plattform und dem Stützkörper weist dann einen kreisbogenförmigen Querschnitt auf. Das Luftpolster, das den Spalt vollständig füllt, führt dazu, dass Veränderungen des Spalts, beispielsweise durch eine Veränderung der Bewegungsrichtung der Plattform in Richtung auf den Stützkörper, durch die Verengung des Spalts an dieser Stelle und die dadurch erzeugte Druckerhöhung im Luftpolster in diesem Bereich sofort ausgeglichen werden. Im Ergebnis bewirken die Luftpolstererzeugungsmittel bzw. das damit erzeugte Luftpolster eine effektive Dämpfung, insbesondere gegenüber mechanischen Einwirkungen auf die Plattform.

Die durch die kostengünstige, in ihren Toleranzen bezüglich der Zylindrizität sehr genaue Herstellung der erfindungsgemäß zylindrischen Stützkörper erreichten Vorteile nehmen gegenüber dem Stand der Technik, bei dem die Herstellungskosten mit der Länge des Stützkörper zunehmen, mit der Länge der Stützkörper zu. So ist es bei einer weiteren Ausgestaltung der Erfindung, bei der die Stützkörper eine Länge von über 1,5 m, insbesondere über 2 m, haben, nicht notwendig mehrere Stützkörper nacheinander vorzusehen, um die Plattform über große Distanzen gut geführt zu bewegen. Damit entfallen die aufwändigen Maßnahmen, die notwendig sind, um aneinander gelegte Stützkörper exakt miteinander zu verbinden. - Ein Vorteil des Einsatzes von kreiszylindrischen Stützkörpern liegt auch darin, dass bei geringem konstruktiven Aufwand eine einfache serienmäßig gehärtete und geschliffene Welle eingesetzt werden kann, die als Vollkörper oder Hohlkörper ausgebildet ist.

Eine stabile Führung der Plattform wird bei einer besonders bevorzugten Ausgestaltung der erfindungsgemäßen Vorrichtung erreicht, bei der zwei zueinander parallele zylindrische Stützkörper vorgesehen sind, die in zwei parallele teilzylindrische Ausnehmungen einer Plattform unter Ausbildung jeweils eines im Querschnitt kreisbogenförmigen Spaltes eingreifen. Die Stützkörper stützen mittels der zwischen ihnen und der Plattform erzeugten Luftpolster die Plattform nach Art einer Schiene, sodass zuverlässig verhindert wird, dass die Plattform in ihrer Bewegung um die Längsachse eines Stützkörpers rotiert.

In einer weiteren Ausgestaltung der Erfindung wird der Stützkörper entlang seiner Längsachse durch ein an einer Basisplatte befestigtes Stützelement gestützt. Dies hat den Vorteil, dass Stützkörper, die nicht aus hochsteifen Materialien hergestellt sind und deshalb je nach Einbaulage durch Durchhängen von den gewünschten engen Toleranzen bezüglich der Zylindrizität abweichen könnten, durch die durchgängige Stützung innerhalb der notwendigen Zylindrizitätstoleranzen gehalten werden.

Stützelement kann dabei jegliches Element sind, das den Stützkörper entlang seiner Längsachse stützt und ein Durchhängen des Stützkörpers verhindert. Vorzugsweise ist das Stützelement ein länglicher, rechteckförmiger Steg, der den Stützkörper auf der der Plattform abgewandten Seite unterstützt. Das Stützelement ist in einer bevorzugten Ausgestaltung fest mit dem Stützkörper verbunden, um dadurch eine möglichst stabile Stützung des Stützkörpers zu erreichen.

Als Basisplatte ist jedes Element/jede Elementgruppe zu verstehen, auf der der Stützkörper getragen wird und mit dem er mittels des Stützelementes fest verbunden werden sollen. Dies kann beispielsweise bei Roboteranwendung der Boden einer Fertigungsstätte sein, entlang dessen der Roboter bewegt werden soll. Bei Fräsmaschinen, bei denen die Plattform als Werkstück- oder -zeughalter eingesetzt wird kann die Basisplatte das Element der Fräsmaschine sein, entlang dessen das Werkstück oder -zeug geführt werden soll.

Nach der Erfindung sind die Luftpolstererzeugungsmittel kugelgelenkig an der Plattform aufgehängt und dazu sind die Luftpolsterzeugungsmittel zweckmäßigerweise über Kugellager an der Plattform aufgehängt. Auf diese Weise wird erreicht, dass sich die Luftpolstererzeugungsmittel gleichsam selbst ausrichten können. Außerdem können Parallelitätsschwankungen des zylindrischen Stützkörpers wirksam ausgeglichen werden. Es liegt im Rahmen der Erfindung, dass zwischen einem an der Plattform befestigten Luftpolstererzeugungsmittel und dem zylindrischen Stützkörper ein im Querschnitt kreisbogenförmiger Luftspalt ausgebildet ist. Im Querschnitt kreisbogenförmiger Luftspalt bezieht sich dabei auf den Zustand der Vorrichtung, in dem bereits ein Luftpolster erzeugt ist. Nach bevorzugter Ausführungsform der Erfindung weist der zwischen einem Luftpolstererzeugungsmittel und dem Stützkörper ausgebildete Luftspalt eine Spaltdicke von 3 bis 40 µm, vorzugsweise von 3 bis 30 µm, bevorzugt von 5 bis 30 µm auf. Die Spaltdicke des Luftpolsters ist zweckmäßigerweise variabel einrichtbar. Erfindungsgemäß ist eine Oberfläche der Luftpolstererzeugungsmittel im Querschnitt kreisbogenförmig ausgebildet.

In einer Fortbildung dieser Ausgestaltung werden die Luftstrahlerzeugungsmittel durch Airpads gebildet. Als Airpads sind dabei Elemente oder Vorrichtungen zu verstehen, die einen oder mehrere Luftstrahlen erzeugen. Dies können Elemente mit Düsen sein, denen über eine Zuleitung Luft zugeführt wird. Es können aber auch Vorrichtungen sein, die aus der Umgebung Fluid aufnehmen, verdichten und als Luftstrahl abgeben.

In einer weiteren Ausgestaltung der Erfindung ist ein Antrieb zur translatorischen Bewegung der Plattform vorgesehen. Je nach Anwendungsgebiet kann es notwendig sein, dass die Plattform nicht von Hand entlang des Stützkörpers bewegt wird, sondern durch einen Antrieb entlang des Stützkörpers bewegt wird. Dies hat neben der Automatisierungsmöglichkeit den Vorteil, dass die Plattform präzise an eine bestimmte Stelle des Stützkörpers bewegt werden kann, da ein Antrieb der Plattform exakter geregelt werden kann, als händisches Bewegen der Plattform. Der Antrieb kann beispielsweise ein Schrittmotor sein. Dabei kann der Schrittmotor in die Plattform integriert werden und die Zahnstange, in die der Schrittmotor eingreift, parallel zum Stützkörper angeordnet werden, beispielsweise auf der Basisplatte. Alternativ kann der Antrieb durch eine entsprechend ausgestaltete Kolben-Zylinder-Einheit gebildet werden, deren Kolben mit der Plattform verbunden ist und deren Hubbewegung entlang des Stützkörpers erfolgt. Ebenso sind andere Antriebsarten wie Spindelantrieb, Riemenantrieb, Kettenantrieb oder andere lineare Antriebe möglich.

Bevorzugt ist der Antrieb jedoch ein Linearmotor. Der Linearmotor ermöglicht einen kontaktlosen Antrieb der Plattform in der Form, dass das mit der Plattform verbundene Antriebsmittel nicht mit der Basisplatte oder anderen, relativ zum Stützkörper feststehenden Elementen verbunden sein, bzw. in Kontakt treten muss. Dadurch werden Reibungsverluste innerhalb des Antriebsmittels bei der Bewegung der Plattform minimiert.

Der Linearmotor kann derart ausgebildet sein, dass der die Spulen tragende Primärteil (Ständer) in die Plattform integriert ist und der Sekundärteil (Reaktionsteil) feststehend, beispielsweise auf der Basisplatte, an dem Stützkörper oder einem weiteren, relativ zum Stützkörper feststehenden Element angeordnet ist. In diesem Fall ist lediglich die Plattform mit elektrischen Anschlüssen zu versehen. Um den Aufbau der Plattform jedoch einfach zu halten, kann der Linearmotor alternativ auch derart aufgebaut sein, dass der Primärteil feststehend relativ zum Stützkörper angeordnet wird und die Plattform den Sekundärteil trägt.

In einer Fortbildung dieser Ausgestaltung trägt die Plattform den Primärteil, der einen zylindrisch ausgestalteten Sekundärteil umgreift. Der zylindrische Sekundärteil ist dabei vorzugsweise parallel neben dem Stützkörper angeordnet. Ein solcher Linearmotor bietet unter anderem den Vorteil, dass er kompakt aufgebaut ist und als Einheit erworben werden kann, sodass der Antrieb, ohne spezielle Elemente auf der Basisplatte zu montieren, einfach in die Vorrichtung integriert werden kann.

Für die Einsetzbarkeit der Vorrichtung ist es von Vorteil, wenn zwei Plattformen gemäß einer Ausgestaltung der Erfindung in zwei orthogonale Richtungen translatorisch bewegbar sind. Dies wird beispielsweise bei einer Ausgestaltung der Erfindung erreicht, bei der in zwei Ebenen orthogonal zueinander stehende Stützkörper vorgesehen sind und erste Stützkörper auf einer Plattform angeordnet sind, die über ein Luftpolster auf zweiten, orthogonal zu den ersten stehenden Stützkörpern abgestützt ist.

Weitere Vorteile, die mit der zuvor beschriebenen Erfindung verbunden sind, liegen darin, dass durch die ausströmende Luft eventuell auf den zylindrischen Stützkörpern liegende Schmutzpartikel weggeblasen werden. Durch die zylindrische Oberfläche ist nur ein geringer Oberflächenabschnitt mit Staubpartikeln versehen, der dann durch die ausströmende Luft bei jedem darüber Hinwegfahren der Plattform gereinigt wird. Darüber hinaus dient die ausströmende Luft auch zur Kühlung eines im gleichen Abschnitt angeordneten Motors, der während des Erzeugens der Antriebskraft Wärme erzeugt. Dadurch kann die für den Antrieb notwendige Kühlung verringert oder gar weggelassen werden. Schließlich stellt es einen Vorteil dar, dass die dargestellte Luftlagerung keine Dichtungen erfordert, die sich gegeneinander bewegende Teile der Vorrichtung abdichten müssen. - Von besonderem Vorteil ist weiterhin, dass die erfindungsgemäße Vorrichtung in staubfreien Räumen betrieben werden kann, weil aufgrund der nicht vorhandenen Reibung zwischen Bauelementen keine Stäube entstehen können.

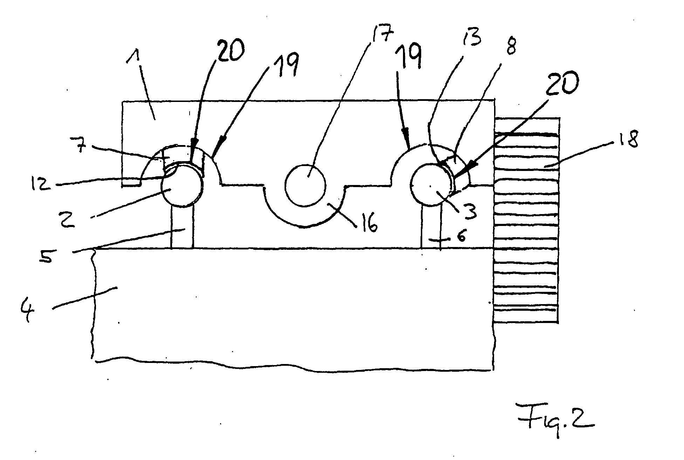

Nachfolgend wird die Erfindung anhand einer lediglich Ausführungsbeispiel darstellenden Zeichnung (Fig.2) näher erläutert. In der Zeichnung zeigen:
- Fig. 1: eine Vorrichtung in einer perspektivischen Ansicht und
- Fig. 2: eine Ausführungsform der erfindungsgemäßen Vorrichtung in einer Draufsicht.

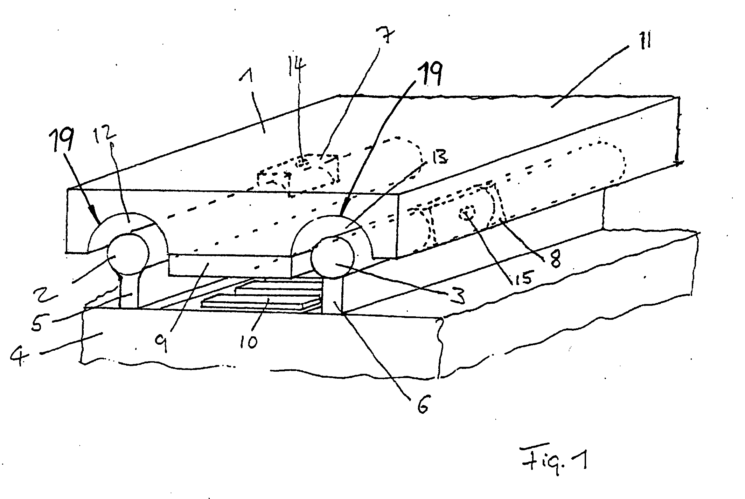

Die in Fig. 1 dargestellte Vorrichtung weist eine Plattform 1, zylindrische Führungskörper 2, 3 und eine Basisplatte 4 auf. Die zylindrischen Führungskörper 2, 3 sind über stegartige Stützelemente 5, 6 mit der Basisplatte 4 verbunden und werden durch die Stützelemente 5, 6 entlang ihrer gesamten Länge gestützt. Die Stützkörper 2, 3 weisen auf ihren Umfangsflächen als Luftpolstererzeugungsmittel 7, 8 Airpads auf. Die Plattform 1 trägt den Primärteil 9 eines Linearmotors. Der Sekundärteil 10 des Linearmotors ist auf der Basisplatte 4 angeordnet.

Die Plattform 1 weist auf ihrer den Stützkörpern 2, 3 abgewandten Seite eine plane, rechteckige Oberfläche 11 auf, auf der zu bewegende, nicht dargestellte Elemente befestigt werden können. Die den Stützkörpern 2, 3 zugewandten Seite der Plattform 1 weist zwei teilzylindrische Ausnehmungen 19 auf, in welche Ausnehmungen 19 die zylindrischen Stützkörper 2, 3 unter Bildung von im Querschnitt kreisbogenförmigen Spalten 12, 13 eingreifen. Luftpolstererzeugungsmittel 7, 8 sind in den kreisbogenförmigen Spalten 12, 13 zwischen Stützkörper 2, 3 und Plattform 1 angeordnet. Ein nicht dargestelltes Flachbandkabel führt elektrische Leitungen zu dem in der Plattform 1 angeordneten Primärteil 9 des Linearmotors. Das Flachbandkabel ist so ausgestaltet, dass es - ohne Behinderung der Bewegung der Plattform 1 - über die gesamte Länge der Stützkörper 2, 3 die elektrischen Leitungen sowie die Luftzufuhr zu der Plattform 1 führen kann.

Die Stützkörper 2, 3 sind bezüglich ihrer Längsachse parallel zueinander angeordnet und überragen die Plattform 1 derart, dass diese entlang der Stützkörper 2, 3 bewegt werden kann. Den auf den Stützkörpern 2, 3 angeordneten Luftpolstererzeugungsmitteln 7, 8 wird über nicht dargestellt Leitungen Druckluft zugeführt. Die Luftpolstererzeugungsmittel 7, 8 weisen Düsen 14, 15 auf, aus denen die Druckluft in Form von Luftstrahlen austritt. Die Düsen 14, 15 der Luftpolstererzeugungsmittel 7, 8 und die weiterer, nicht dargestellter Luftpolstererzeugungsmittel sind derart ausgerichtet, dass die Luftstrahlen von den Stützkörpern 2, 3 gegen die Plattform 1 gerichtet sind. Dabei sind die Düsen 14, 15 derart ausgerichtet, dass die von ihnen erzeugten Luftstrahlen nicht parallel verlaufen.

Im Betrieb wird durch die aus den Düsen 14, 15 austretenden Luftstrahlen ein Luftpolster gebildet, dass die Plattform 1 stützt. Die nicht parallele Ausrichtung der Luftstrahlen führt zu einer exakten Führung der Plattform 1, da horizontale oder vertikale Abweichungen in der entlang der Stützkörper 2, 3 ausgerichteten Bewegung der Plattform 1 durch den von den entgegen der Abweichungsrichtung gerichteten Luftstrahlen erzeugten Impuls und den durch die partielle Verkleinerung der Spalte 12, 13 in diesen Bereichen erhöhten Druck im Luftpolster korrigiert werden.

Die Plattform 1 wird durch den Linearmotor angetrieben. Dabei kann durch den Linearmotor eine Antriebskraft oder eine Bremskraft erzeugt werden. Die Antriebs- oder Bremskraft kann so geregelt werden, dass die Plattform 1 zu vordefinierten Stellen entlang der Stützkörper 2, 3 bewegt werden und exakt an diesen Stellen angehalten werden kann.

In Fig. 2 ist eine Ausführungsform der erfindungsgemäßen Vorrichtung dargestellt. Zur Vermeidung von Wiederholungen werden im Folgenden lediglich die sich unterscheidenden Bauteile beschrieben. Gleiche Bauteile sind mit gleichen Bezugszeichen gekennzeichnet.

Diese Vorrichtung unterscheidet sich von der in Fig.1 dargestellten Vorrichtung dadurch, daß die Luftpolstererpengungsmittel 7, 8 kugelgelenkig an der Plattform 1 aufgehängt sind.

Bei der in Fig. 2 dargestellten Vorrichtung wird die Plattform 1 mittels eines Linearmotors angetrieben. Bei diesem Linearmotor trägt die Plattform 1 den Primärteil 16, der einen zylindrischen Sekundärteil 17 umgreift. Der zylindrische Sekundärteil 17 ist zwischen den Stützkörpern 2, 3 angeordnet und an deren Enden gehalten. Zur Erzeugung einer Antriebs- oder Bremskraft wird die in dem Primärteil 16 vorgesehene Spule mit elektrischem Strom über Leitungen versorgt, die in einem länglichen Flachbandkabel 18 geführt werden.

Im Betrieb wird die Plattform 1 durch das von den Luftpolstererzeugungsmittel 7, 8 erzeugte Luftpolster gelagert und durch die Antriebskraft des zylindrischen Linearmotors entlang der Stützkörper 2, 3 bewegt.

Die zylindrischen Stützkörper sind hinsichtlich der Toleranzen ihrer Zylindrizität derart exakt hergestellt, dass bei gleichbleibender Zufuhr von Luft die Spalte 12, 13 zwischen der Plattform 1 und den Stützkörpern 2, 3 entlang der gesamten Länge der Stützkörper gleich bleiben. Da aufgrund des gleichbleibenden Spalts das Luftpolster in diesem Spalt ebenfalls gleich bleibt, kann die Plattform gleichmäßig durch den Linearmotor bewegt werden, ohne dass die Plattform in ihrer Bewegung durch ein variierendes Luftpolster beschleunigt oder verlangsamt wird.

In der Fig. 2 ist erkennbar, dass zwischen einem an der Plattform 1 befestigten Luftpolstererzeugungsmittel 7, 8 und dem zylindrischen Stützkörper 2, 3 ein im Querschnitt kreisbogenförmiger Luftspalt 20 ausgebildet ist, dessen Spaltdicke (d. h. Abstand zwischen der Oberfläche des Luftpolstererzeugungsmittel 7, 8 und der Oberfläche des Stützkörpers 2, 3) im Mikrometer-Bereich liegt und vorzugsweise 5 bis 25 µm beträgt.

In den Fig. 2 ist erkennbar, dass die im Bereich der benachbarten Stützkörper 2, 3 jeweils angeordneten Luftpolstererzeugungsmittel 7, 8 eine unterschiedliche Orientierung bezüglich des Stützkörpers 2, 3 aufweisen. Es liegt im Rahmen der Erfindung, dass in nicht dargestellter Weise die in Längsrichtung der Stützkörper 2, 3 hintereinander angeordneten Luftpolstererzeugungsmittel 7, 8 in Bezug auf den Umfang des zylindrischen Stützkörpers 2, 3 entsprechend versetzt zueinander angeordnet sind. Dadurch wird eine besonders funktionssichere und präzise Führung der Plattform 1 erzielt.

## Patentansprüche

1. Vorrichtung mit einer Plattform (1) und zumindest einem Stützkörper (2, 3) sowie Luftpolstererzeugungsmitteln (7, 8) zur Erzeugung eines Luftpolsters zwischen der Plattform (1) und dem zumindest einen Stützkörper (2, 3),
wobei die Plattform (1) luftgleitgelagert translatorisch bewegbar ist,
wobei der zumindest eine Stützkörper (2, 3) Zylindrisch ausgebildet ist und in eine teilzylindrische Ausnehmung (19) der Plattform (1) unter Ausbildung eines im Querschnitt kreisbogenförmigen Spaltes (12, 13) eingreift und
wobei die Luftpolstererzeugungsmittel (7, 8) eine im Querschnitt kreisbogenförmig ausgebildete Oberfläche aufweisen, so daß im Betrieb ein im Querschnitt kreisbogenförmiger Luftspalt (20) zwischen den Luftpolstererzeugungsmitteln (7, 8) und dem zumindest einen zylindrischen Stützkörper (2, 3) ausgebildet ist, **dadurch gekennzeichnet,**
**daß** die Luftpolstererzeugungsmittel (7, 8) kugelgelenkig an der Plattform (1) aufgehängt sind.

2. Vorrichtung nach Anspruch 1, **dadurch gekennzeichnet, dass** die Luftpolstererzeugungsmittel (7, 8) in dem kreisbogenförmigen Spalt (12, 13) zwischen dem zumindest einen Stützkörper (2, 3) und der Plattform (1) angeordnet sind.

3. Vorrichtung nach einem der Ansprüche 1 oder 2, **dadurch gekennzeichnet, dass** in Längsrichtung des zumindest einen zylindrischen Stützkörpers (2, 3) eine Mehrzahl von Luftpolstererzeugungsmitteln (7, 8) hintereinander angeordnet sind.

4. Vorrichtung nach Anspruch 3, **dadurch gekennzeichnet, dass** zumindes ein Teil der Luftpolstererzeugungsmittel (7, 8) in Bezug auf den Umfang des zumindest einen zylindrischen Stützkörpers (2, 3) versetzt zueinander angeordnet sind.

5. Vorrichtung nach einem der Ansprüche 1 bis 4, **dadurch gekennzeichnet, dass** zwei zueinander parallele zylindrische Stützkörper (2, 3) vorgesehen sind, die in zwei parallele teilzylindrische Ausnehmungen (19) einer Plattform (1) unter Ausbildung jeweils eines im Querschnitt kreisbogenförmigen Spaltes (12, 13) eingreifen.

6. Vorrichtung nach einem der Ansprüche 1 bis 5, **dadurch gekennzeichnet, dass** als Luftpolstererzeugungsmittel (7, 8) Luftstrahlerzeugungsmittel vorgesehen sind.

7. Vorrichtung nach Anspruch 6, **dadurch gekennzeichnet, dass** die Luftstrahlerzeugungsmittel Airpads sind.

## Claims

1. A device with a platform (1) and at least one supporting body (2, 3) and air cushion generating means (7, 8) for generating an air cushion between the platform (1) and the at least one supporting body (2, 3), wherein the platform (1) is carried on a cushion of air so that it can execute a sliding translational motion, wherein the at least one supporting body (2, 3) is cylindrical, and engages into a partially symmetrical recess (19) of the platform (1), forming a gap (12, 13) with a circular cross section, and wherein the air cushion generating means (7, 8) have a surface with a circular cross section, so that an air gap (20) with a circular cross section forms during operation between the air cushion generating means (7, 8) and the at least one cylindrical supporting body (2, 3), **characterized in that** the air cushion generating means (7, 9) are hinged by a socket joint to the platform (1).

2. The device according to claim 1, **characterized in that** the air cushion generating means (7, 8) are arranged in the circular gap (12, 13) between the at least one supporting body (2, 3) and the platform (1).

3. The device according to one of claims 1 or 2, **characterized in that** a plurality of air cushion generating means (7, 8) is arrange din sequence in the longitudinal direction of the at least one cylindrical supporting body (2, 3).

4. The device according to claim 3, **characterized in that** at least a portion of the air cushion generating means (7, 8) are arranged offset to each other relative to the circumference of the at least one cylindrical supporting body (2, 3).

5. The device according to one of claims 1 to 4, **characterized in that** the two mutually parallel cylindrical supporting bodies (2, 3) are provided, which engage in two parallel partially cylindrical recesses (19) of a platform (1) with the formation of a respective gap (12, 13) with a circular cross section.

6. The device according to one of claims 1 to 5, **characterized in that** the air jet generating means are provided as the air cushion generating means (7, 8).

7. The device according to claim 6, **characterized in that** the air jet generating means are air pads.

## Revendications

1. Dispositif avec une plate-forme (1) et au moins un corps d'appui (2, 3) ainsi qu'avec des moyens de création de coussins d'air (7, 8)) pour la création d'un coussin d'air entre la plate-forme (1) et au moins le corps d'appui (2, 3),
la plate-forme (1) étant mobile en translation par glissement d'air,
au moins le corps d'appui (2, 3) étant conçu sous forme cylindrique et s'accrochant dans un évidement cylindrique (19) de la plate-forme (1) en formant une fente (12, 13) de section transversale en arc de cercle
et les moyens de génération d'un coussin d'air (7, 8) présentant une surface de section transversale en forme d'un arc de cercle, pour qu'en cours de fonctionnement, une fente d'air (20) de section transversale en forme d'arc de cercle soit formée entre les moyens de création d'un coussin d'air (7, 8) et au moins le corps d'appui (2, 3) cylindrique,
**caractérisé en ce que**
les moyens de création d'un coussin d'air (7, 8) sont accrochés sous la forme de rotules sur la plate-forme (1).

2. Dispositif selon la revendication 1, **caractérisé en ce que** les moyens de création d'un coussin d'air (7, 8) sont placés dans la fente en forme d'arc de cercle (12, 13) entre au moins le corps d'appui (2, 3) et la plate-forme (1).

3. Dispositif selon l'une quelconque des revendications 1 ou 2, **caractérisé en ce que** dans le sens longitudinal d'au moins le corps d'appui cylindrique (2, 3), une pluralité de moyens de création de coussins d'air (7, 8) sont placés l'un derrière l'autre.

4. Dispositif selon la revendication 3, **caractérisé en ce qu'**au moins une partie des moyens de création de coussins d'air (7, 8) est placée de façon déportée les uns par rapport aux autres, par rapport à la périphérie d'au moins le corps d'appui cylindrique (2, 3).

5. Dispositif selon l'une quelconque des revendications 1 à 4, **caractérisé en ce qu'**on a prévu deux corps d'appui cylindriques (2, 3), parallèles entre eux, qui s'accrochent dans deux évidement parallèles (19) partiellement cylindriques d'une plate-forme (1), en formant respectivement une fente (12, 13) de section transversale en arc de cercle.

6. Dispositif selon l'une quelconque des revendications 1 à 5, **caractérisé en ce qu'**on a prévu des moyens de création d'un jet d'air, en tant que moyens de création d'un coussin d'air (7, 8).

7. Dispositif selon la revendication 6, **caractérisé en ce que** les moyens de créations de jets d'air sont des airpads.
